# EUROPEAN PATENT APPLICATION

(11) **EP 4 105 915 A1**
(43) Date of publication of application: **21.12.2022**
(21) Application number: 21752958.5
(22) Date of filing: 07.01.2021
(51) Int. Cl.: G09B 29/00, G09B 29/10

(54) **NAUTICAL CHART DISPLAY DEVICE, NAUTICAL CHART DISPLAY METHOD, PROGRAM, AND OBSERVATION AUXILIARY TOOL**

(30) Priority: 12.02.2020 JP 2020021622
(71) Applicant: FURUNO ELECTRIC CO., LTD., Nishinomiya-City Hyogo 662-8580 (JP)
(72) Inventor: YAMABAYASHI, Jun, Nishinomiya-City, Hyogo 6628580 (JP)
(74) Representative: Müller Hoffmann & Partner
(86) International application number: PCT/JP2021/000306
(87) International publication number: WO 2021/161691

(57) **Abstract**

Provided is a chart display device capable of easily partially confirming a chart. A chart display device includes with a display unit to display the chart on a screen, a touch position detection unit to detect a touched position of the screen, an operation auxiliary tool determination unit to determine whether an operation auxiliary tool having detected elements to be detected by the touch position detection unit is placed on the screen, an area specification unit to specify a corresponding area corresponding to the operation auxiliary tool in the chart based on the position of the detected elements, and an operation reception unit to receive an operation for the corresponding area in the chart.

## Description

### TECHNICAL FIELD

The present invention relates to a chart display device, a chart display method, a program, and an operation auxiliary tool.

### BACKGROUND OF THE INVENTION

Patent Document 1 discloses a chart display device comprising: a display unit for displaying a chart on a screen; a touch operation specifying unit for specifying a touch operation on the screen; a tool specifying unit for specifying the position and direction of a measuring instrument placed on the screen; and a tool display processing unit for displaying a distance scale according to the scale of the chart at the position where the measuring instrument is placed on the screen based on the position and direction specified by the tool specifying unit.

### Prior art documents

### Patent Documents

Patent Document 1: WO 2019/093456

### SUMMARY OF THE INVENTION

### Problems to be Solved by the Invention

Incidentally, the chart display device may be seen by a plurality of persons, but the places and information that each person wants to see may differ.

The present invention has been made in view of the above problems. A main object of the present invention is to provide a chart display device, a chart display method, a program, and an operation auxiliary tool that facilitate partial confirmation of a chart.

### Solution to Problem(s)

To solve the problem mentioned above, a chart display device according to one embodiment of the present invention comprises: a display unit for displaying a chart on a screen; a touch position detection unit for detecting a touched position of the screen; an operation auxiliary tool determination unit for determining whether an operation auxiliary tool having detected elements to be detected which can be detected by the touch position detection unit is placed on the screen; a area specification unit for specifying a corresponding area in the chart corresponding to the operation auxiliary tool based on the position of the detected elements of the operation auxiliary tool placed on the screen; and an operation reception unit for receiving an operation on the corresponding area in the chart.

According to another embodiment of the present invention, a chart display method for a chart display device having a display unit for displaying a chart on a screen and a touch position detection unit for detecting a touched position of the screen, the chart display method comprising; determining whether an operation auxiliary tool having an detected elements which can be detected by the touch position detection unit is placed on the screen; specifying a corresponding area corresponding to the operation auxiliary tool in the chart based on the position of the detected elements of the operation auxiliary tool placed on the screen; and receipting an operation on the corresponding area in the chart.

According to another embodiment of the present invention, a computer program for a computer of a chart display device having a display unit for displaying a chart on a screen and a touch position detection unit for detecting a touched position of the screen, the computer program comprising; an operation auxiliary tool determination unit for determining whether or not an operation auxiliary tool having detected elements which can be detected by the touch position detection unit is placed on the screen; an area specification unit for specifying a corresponding area corresponding to the operation auxiliary tool in the chart based on the position of the detected elements of the operation auxiliary tool placed on the screen; and an operation reception unit for receiving an operation on the corresponding area in the chart.

An operation auxiliary tool according to another embodiment of the present invention is an operation auxiliary tool used in a chart display device having a display unit for displaying a chart on a screen and a touch position detection unit for detecting a touched position of the screen, the operation auxiliary tool comprising; detected elements are detected which can be detected by the touch position detection unit; and inputting an operation for a corresponding area in the chart corresponding to the operation auxiliary tool which is specified based on the position of the detected elements of the operation auxiliary tool placed on the screen.

### EFFECT(S) OF THE INVENTION

According to the present invention, it is easy to partially confirm the chart.

### BRIEF DESCRIPTION OF THE DRAWINGS

FIG. 1 is a diagram showing a configuration example of a ship ICT system.
FIG. 2 is a diagram showing an example of the appearance of a chart display device.
FIG. 3 is a diagram showing an example of a configuration of an operation auxiliary tool.
FIG. 4 is a diagram showing an example of a configuration of a chart display device.
FIG. 5 is a diagram showing an example of the procedure of the chart display method.
FIG. 6 is a diagram showing an operation reception example.
FIG. 7 is a diagram showing an operation reception example.
FIG. 8 is a diagram showing an operation reception example.
FIG. 9 is a diagram showing an operation reception example.
FIG. 10 is a diagram showing an operation reception example.
FIG. 11 is a diagram showing an operation reception example.

### DETAILED DESCRIPTION OF THE INVENTION

Embodiments of the present invention will be described below with reference to the drawings.

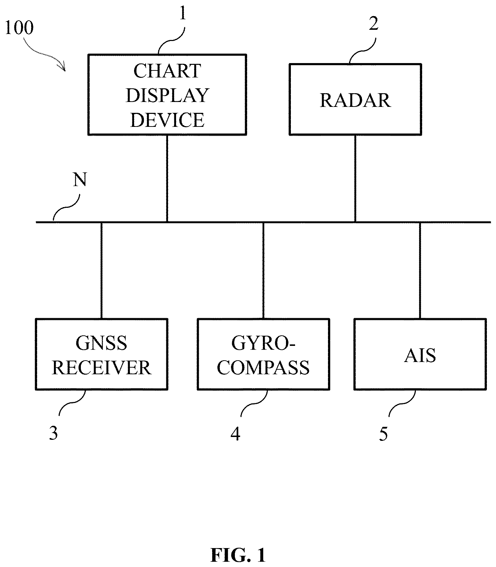

FIG. 1 is a block diagram showing a configuration example of a ship ICT system 100 including the chart display device 1 according to the embodiment.

The ship ICT system 100 includes, for example, a radar 2, a GNSS receiver 3, a gyrocompass 4, and an AIS 5 in addition to the chart display device 1. These apparatuses are connected to a network N such as a LAN (Local Area Network), for example, and may perform network communication with each other.

The chart display device 1 is an ECDIS (Electronic Chart Display and Information System). The chart display device 1 may be a GNSS plotter. A specific configuration example of the chart display device 1 will be described later.

Note that the chart display device 1 may be configured as a device capable of cooperating with the ECDIS and different from the ECDIS.

The radar 2 detects a target existing around its own ship and generates target tracking data (TT data) representing the position and velocity vector of the target.

The GNSS receiver 3 detects a position of the own ship based on radio waves received from the GNSS (Global Navigation Satellite System) and generates position data representing the position of the own ship.

The gyrocompass 4 detects a heading of the own ship and generates bearing data showing the heading. Alternatively, a GPS compass or a magnetic compass may be used.

The AIS (Automatic Identification System) 5 transmits AIS data to surrounding ships and land control, and receives AIS data from surrounding ships and land control. In addition, a VDES (VHF Data Exchange System) may be used.

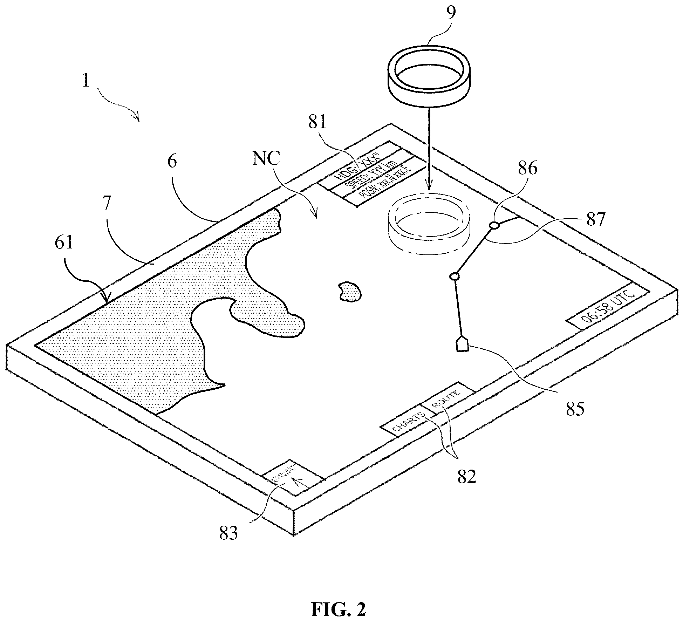

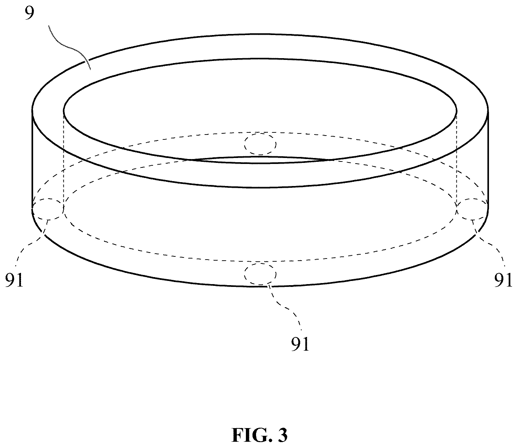

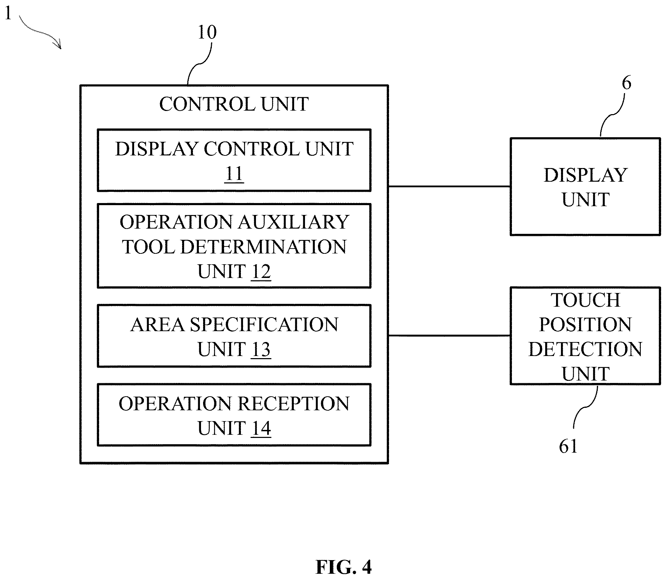

FIG. 2 is a diagram showing an example of the appearance of the chart display device 1. FIG. 3 is a diagram showing a configuration example of the operation auxiliary tool 9 used in the chart display device 1. FIG. 4 is a diagram showing an example of the configuration of the chart display device 1.

As shown in FIG. 2, the chart display device 1 includes a display unit 6 for displaying a chart NC on a screen 61, and a touch position detection unit 7 for detecting a touched position of the screen 61. The touch position detection unit 7 is disposed on the screen 61 of the display unit 6.

In the present embodiment, the display unit 6 is relatively large (For example, a screen size of 40 inches or larger), and the display unit 6 is arranged in such a manner that the screen 61 faces upward. For example, the display unit 6 has a table shape and may be surrounded by a plurality of persons. In addition, the display unit 6 may be arranged with the screen 61 oriented horizontally or obliquely upward.

The display unit 6 is, for example, a liquid crystal display (LCD) or an organic electric lift (EL) display. The touch position detection unit 7 is, for example, a capacitive touch sensor, and may detect a touch position by a finger or a stylus pen. Further, the touch position detection unit 7 may detect a operation auxiliary tool 9 placed on the screen 61.

As shown in FIG. 3, the operation auxiliary tool 9 has a shape like a loupe, for example. Specifically, the operation auxiliary tool 9 has a thin cylindrical shape with a relatively short axial direction. The operation auxiliary tool 9 is placed on the screen 61 so that one end face faces the screen 61, in other words, the axial direction is aligned with the normal direction of the screen 61 (see FIG. 2).

The body of the operation auxiliary tool 9 is formed of a nonconductive material which is not detectable by the touch position detection unit 7. The body of the operation auxiliary tool 9 may or may not be transparent. The operation auxiliary tool 9 is not limited to a hollow cylindrical shape, but may be a solid cylindrical shape in which the inside is filled or the whole is formed of a transparent material.

An end face of the operation auxiliary tool 9 may be provided with a plurality of detected elements 91 that may be detected by the touch position detection unit 7. The plurality of detected elements 91 are arranged at predetermined intervals along an outer edge of the operation auxiliary tool 9. When the touch position detection unit 7 is a capacitive touch sensor, the detected element 91 is formed of, for example, conductive rubber.

The detected elements 91 may be provided on both end faces of the operation auxiliary tool 9. Thus, the operation auxiliary tool 9 may be used even if it is inverted. In addition, it is not limited to the plurality of detected elements 91. For example, one detected element 91 having a predetermined area may be provided on an end face of the operation auxiliary tool 9.

As shown in FIG. 4, the chart display device 1 further includes a control unit 10 to which the display unit 6 and the touch position detection unit 7 are connected.

The control unit 10 is a computer including a CPU, a RAM, a ROM, a nonvolatile memory, an input/output interface, and the like. The CPU of the control unit 10 executes information processing according to a program loaded from a ROM or a nonvolatile memory into a RAM.

The program may be supplied via an information storage medium such as, for example, an optical disk or a memory card, or may be supplied via a communication network such as, for example, the Internet or a LAN.

A nonvolatile memory of the control unit 10 stores various data such as a program, chart data, data of a point registered by a user, data of a route created by the user, and the like. These data may be acquired from an external device via the network N.

The control unit 10 includes a display control unit 11, an operation auxiliary tool determination unit 12, an area specification unit 13, and an operation reception unit 14. These functional units are realized by the CPU of the control unit 10 executing information processing in accordance with a program.

The display control unit 11 performs processing for displaying the chart NC or the like on the screen 61 of the display unit 6. The operation auxiliary tool determination unit 12 determines whether or not the operation auxiliary tool 9 is placed on the screen 61 of the display unit 6 based on a detection signal of the touch position detection unit 7.

When it is determined that the operation auxiliary tool 9 is placed on the screen 61, the area specification unit 13 specifies a corresponding area corresponding to the operation auxiliary tool 9 in the chart NC based on a position of the detected elements 91 of the operation auxiliary tool 9.

The operation reception unit 14 receives a prescribed operation for the corresponding area in the chart NC. The details of the processes performed by the display control unit 11, the operation auxiliary tool determination unit 12, the area specification unit 13, and the operation reception unit 14 will be described later.

As shown in FIG. 2, an own ship basic information 81 showing the position and heading of the own ship in text, a menu button 82 for managing the chart NC, creating a route, etc., and adjustment button 83 for adjusting the orientation of the chart NC are displayed on the screen 61 of the display part 6 so as to be superimposed on the chart NC.

On the screen 61 of the display unit 6, a own ship symbol 85 indicating the position and heading of the own ship with symbols on the chart NC, a waypoint 86 registered in advance by a user, and a route 87 set to follow the waypoint 86 in order are displayed.

The position and the orientation of the own ship symbol 85 in the screen 61 are determined so as to correspond to a position data generated by the GNSS receiver 3 and an orientation data generated by the gyrocompass 4. Further, another ship symbol indicating another ship may be displayed based on AIS data acquired by the AIS 5.

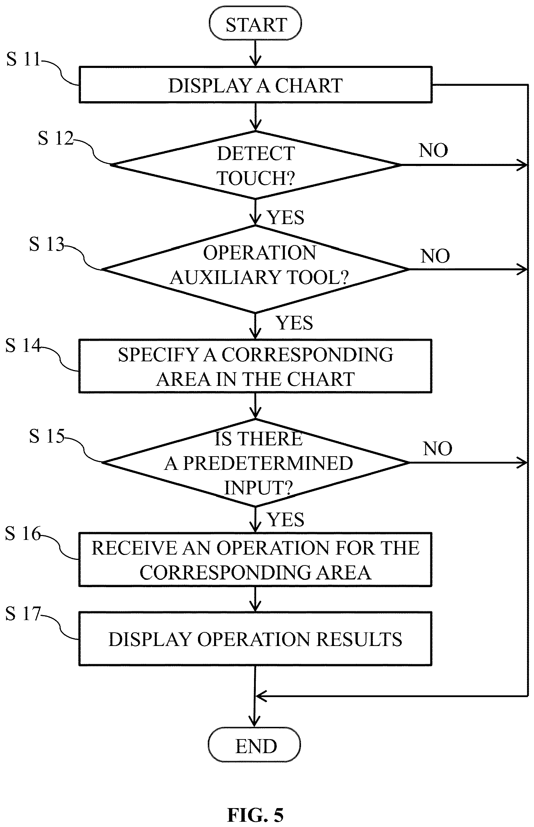

FIG. 5 is a diagram showing an example of the process of a chart display method, according to an embodiment. The chart display method may be implemented in a chart display device 1. The control unit 10 of the chart display device 1 executes information processing shown in the chart in accordance with a program.

First, the control unit 10 displays the chart NC or the like on the screen 61 of the display unit 6 (S 11; processing as the display control unit 11). Next, the control unit 10 determines whether or not the screen 61 is touched based on a detection signal from the touch position detection unit 7 (S 12).

When a touch to the screen 61 is detected (S 12: YES), the control unit 10 determines whether the touch is by the operation auxiliary tool 9, that is, whether the operation auxiliary tool 9 is placed on the screen 61 (S 13; processing as the operation auxiliary tool determination unit 12).

Specifically, the determination of whether or not the operation auxiliary tool 9 is placed on the screen 61 is realized by determining whether or not a positional relationship of detected plurality of touch positions corresponds to a predetermined positional relationship. Further, it may be added to the condition that the positional relationship of the plurality of detected touch positions does not change for a predetermined period of time.

If it is determined that the operation auxiliary tool 9 is placed on the screen 61 (S 13: YES), the control unit 10 specifies a corresponding area in the chart NC corresponding to the operation auxiliary tool 9 based on the position of the detected element 91 of the operation auxiliary tool 9 (S 14; processing as the area specification unit 13).

Specifically, in the chart NC displayed on the screen 61, an area having a predetermined shape determined by the positions of the plurality of detected elements 91 of the operation auxiliary tool 9 is specified as a corresponding area. For example, a circular area may be defined by the plurality of detected elements 91 provided along an outer edge on a lower surface of the cylindrical operation auxiliary tool 9 is specified as a corresponding area.

Next, when a predetermined input is received from the user (S 15: YES), the control unit 10 receives an operation for the corresponding area in the chart NC (S 16; processing as the operation receiving unit 14), and the control unit 10 displays the operation result on the screen 61 of the display unit 6 (S 17; processing as the display control unit 11).

Specifically, the control unit 10 detects an input from the user based on the detection signal of the touch position detection unit 7, and receives the operation for the corresponding area preliminarily associated with the input. The operation for the corresponding area preliminarily associated with the input is, for example, an operation for changing the corresponding area.

The input by the user may be an input by the operation auxiliary tool 9 itself, such as rotating or translating the operation auxiliary tool 9 on the screen 61. When a change pattern of the position of the detected element 91 coincides with a predetermined pattern, the control unit 10 receives an operation preliminarily associated with the predetermined pattern.

The input by the user may be an input by a touch other than the operation auxiliary tool 9, such as drawing a predetermined locus with a finger or the like while the operation auxiliary tool 9 is placed on the screen 61. When a change pattern of a touch position detected together with the detected element 91 coincides with a predetermined pattern, a control part 10 receives an operation preliminarily associated with the predetermined pattern.

A specific example of the user's input and operation of the corresponding area will be described below.

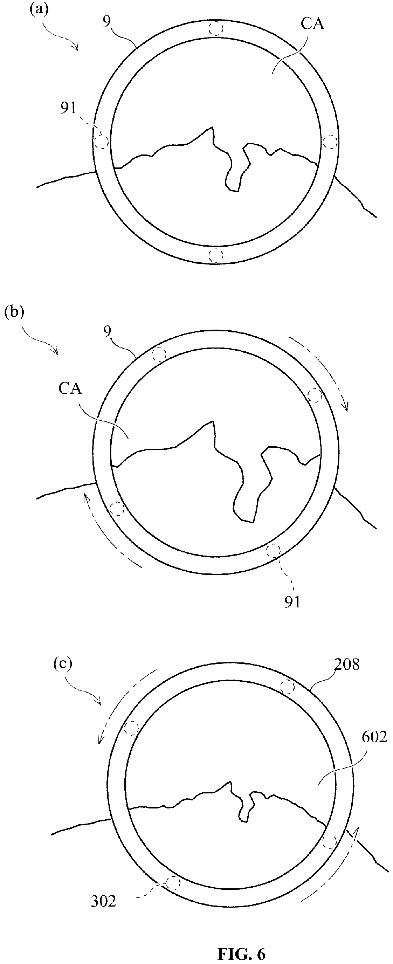

As shown in FIG. 6, an operation for the corresponding area CA in the chart NC is an operation for enlarging or reducing a corresponding area CA. For example, (b) when the user rotates the operation auxiliary tool 9 clockwise, the corresponding area CA may be enlarged and displayed, and (c) when the user rotates the operation auxiliary tool 9 counterclockwise, the corresponding area CA may be reduced and displayed. Thus, it is possible to confirm a part of the chart NC by enlarging or reducing it.

Specifically, when the control unit 10 detects that the plurality of detected elements 91 have moved in a clockwise circular manner, it receives an operation for enlarging the corresponding area CA and displays the enlarged corresponding area CA. On the other hand, when the plurality of detected elements 91 move in a counterclockwise circular manner, the control unit 10 receives an operation to reduce the corresponding area CA and displays the reduced corresponding area CA.

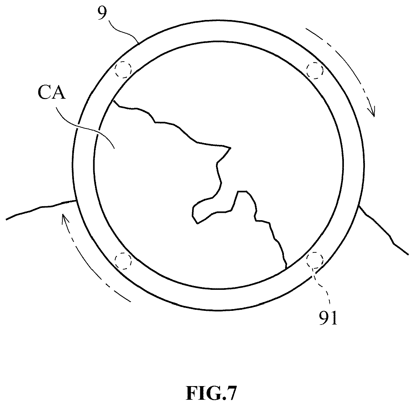

As shown in FIG. 7, an operation for the corresponding area CA in the chart NC may be an operation for changing the direction of the corresponding area CA (That is, the corresponding area CA is rotated.). For example, when the user rotates the operation auxiliary tool 9 clockwise or counterclockwise, the corresponding area CA is displayed by changing its direction accordingly. Thus it is possible to confirm a part of the chart NC in a desired direction.

Specifically, when the control unit 10 detects that the plurality of detected elements 91 have moved in a circular manner, it receives an operation to change the direction of the corresponding area CA, and rotates the corresponding area CA to display it so that the positional relationship with the detected elements 91 is maintained. In order to distinguish from the aforementioned enlargement or reduction, input by touch of a finger or the like may be combined.

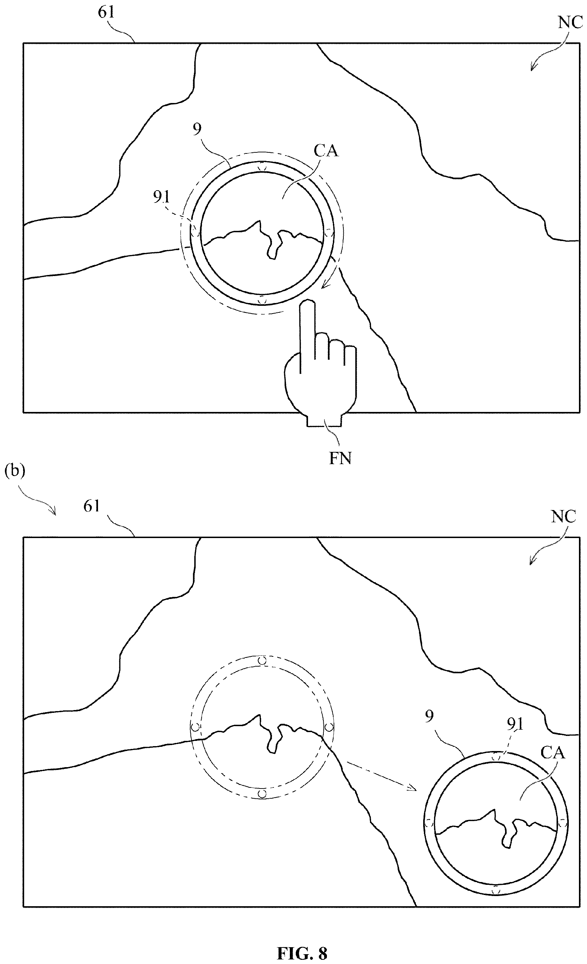

As shown in FIG. 8, an operation for the corresponding area CA in the chart NC may be an operation for moving the copy of the corresponding area CA to another position in the chart NC in accordance with the movement of the operation auxiliary tool 9. (That is, the corresponding area CA is cut from the chart NC.) For example, when (a) the user draws a circle around the operation auxiliary tool 9 with the finger FN, (b) a copy of the corresponding area CA is moved and displayed together with the operation auxiliary tool 9.

Specifically, when the control unit 10 detects that the touch of a finger or the like has moved in a circle surrounding the plurality of detected elements 91, the control unit 10 generates a copy of the corresponding area CA, and moves and displays the copy of the corresponding area CA so that a positional relationship with the detected elements 91 is maintained. Thus, a part of the chart NC may be moved to a desired position (For example, a position close to an edge of the screen 61) to be confirmed.

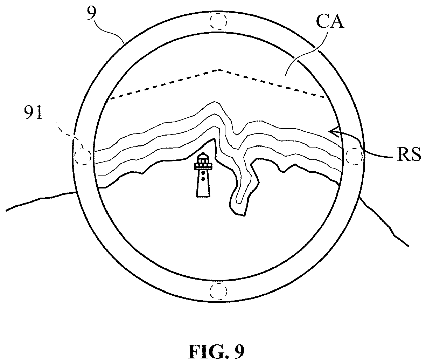

As shown in FIG. 9, an operation for the corresponding area CA in the chart NC may be an operation to replace the corresponding area CA with another image RS. For example, when a predetermined input is made by the operation auxiliary tool 9 or by the touch of a finger or the like, the image of the corresponding area CA in the chart NC of the vector format is replaced with the image RS of the same area in the chart of a raster format.

In addition, if the display unit 6 is a 3D display, the corresponding area CA may be replaced with an image for 3D display. The corresponding area CA may be replaced with a radar image based on TT data acquired from the radar 2. Thus, a part of the chart NC may be confirmed by an image of a desired format or an image having desired information.

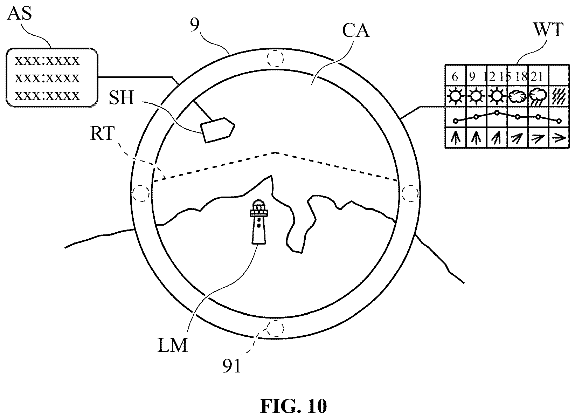

As shown in FIG. 10, an operation for the corresponding area CA in the chart NC may be an operation for displaying information associated with the corresponding area CA. For example, when a predetermined input is made by the operation auxiliary tool 9 or by touching a finger or the like, information such as meteorological and oceanographic information WT; past tracks RT; landmarks LM such as lighthouses on land; AIS information AS of other ship symbols SH; etc. associated with the corresponding area CA are additionally displayed.

The information associated with the corresponding area CA may be displayed inside the corresponding area CA as in the past track RT and landmarks LM on land, or may be displayed outside the corresponding area CA as in the meteorological/oceanographic information WT and AIS information AS in a manner associated with the corresponding area CA or a symbol inside the corresponding area CA. Thus, desired information related to a part of the chart NC may be confirmed.

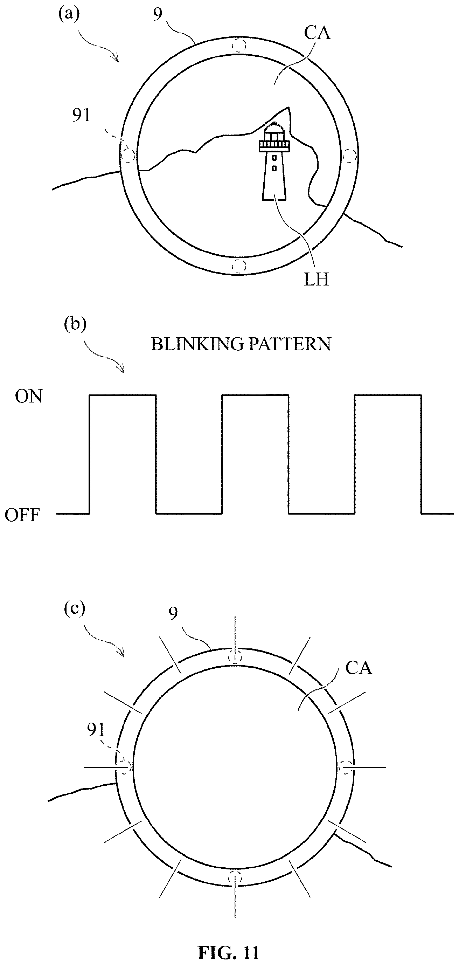

As shown in FIG. 11, an operation for the corresponding area CA in the chart NC may be an operation for flashing the corresponding area CA with a same flashing pattern as a lighthouse included in the corresponding area CA. For example, when a symbol LH of the lighthouse is included in the corresponding area CA determined by the operation auxiliary tool 9, the control unit 10 flashes the corresponding area CA with the flashing pattern based on the data of the flashing pattern of the lighthouse.

According to the embodiment described above, it is easy to confirm necessary information about a part where the operation auxiliary tool 9 is placed without changing the whole display of the chart NC. Thus, even when the display unit 6 is surrounded by a plurality of persons, it is possible to confirm a place and information that each person wants to see, and it is possible to improve the efficiency of planning a navigation plan.

Although the embodiments of the present invention have been described above, the present invention is not limited to the embodiments described above, and it is of course possible for those skilled in the art to make various modifications.

### Description of Codes

(1) Chart display device,
(10) Control unit,
(11) Display control unit,
(12) Operation auxiliary tool determination unit,
(13) Area identification unit,
(14) Operation reception unit,
(2) Radar,
(3) GNSS receiver,
(4) Gyro compass,
(5) AIS,
(6) Display unit,
(7) Touch position detection unit,
(81) Basic information of own ship,
(82) Menu button,
(83) Orientation adjustment button, (85) Own ship symbol,
(86) Waypoint,
(87) Route,
(9) Operation auxiliary tool,
(91) Eetected element,
(100) Ship ICT system,
(NC) Chart,
(CA) Compatible area

## Claims

1. A chart display device, comprising:
a display unit configured to display a chart on a screen;
a touch position detection unit configured to detect a touched position of the screen;
an operation auxiliary tool determination unit configured to determine whether an operation auxiliary tool having detected elements which can be detected by the touch position detection unit is placed on the screen, the detected elements being detected by the touch position detection unit;
an area specification unit configured to specify a corresponding area corresponding to the operation auxiliary tool in the chart based on a position of the detected elements of the operation auxiliary tool placed on the screen; and
an operation reception unit configured to receive an operation for the corresponding area in the chart.

2. The chart display device of claim 1; wherein,
the operation reception unit is configured to receive an operation associated with a predetermined pattern when a change pattern of the position of the detected elements coincides with the predetermined pattern.

3. The chart display device of claim 2; wherein,
the change pattern is inputted when the operation auxiliary tool placed on the screen is rotated or translated.

4. The chart display device of claim 1; wherein,
the operation reception unit is configured to receive the operation associated with the predetermined pattern when the change pattern of the touch position detected together with the detected element coincides with the predetermined pattern.

5. The chart display device of claim 4; wherein,
the change pattern is inputted when a locus is drawn by a touch other than the detected elements while the operation auxiliary tool is placed on the screen.

6. The chart display device of any of claims 1 to 5, wherein,
the operation is an operation for changing the corresponding area.

7. The chart display device of any of claims 1 to 6, wherein,
the operation is an operation to enlarge or reduce the corresponding area.

8. The chart display device of any of claims 1 to 6, wherein,
the operation is an operation for changing a direction of the corresponding area.

9. The chart display device of any of claims 1 to 6, wherein,
the operation is an operation for moving a copy of the corresponding area to another position in the chart in accordance with the movement of the operation auxiliary tool.

10. The chart display device of any of claims 1 to 6, wherein,
the operation is an operation to replace the corresponding area with another image.

11. The chart display device of any of claims 1 to 5; wherein,
the operation is an operation for displaying information associated with the corresponding area.

12. The chart display device of any of claims 1 to 5; wherein,
the operation is an operation for blinking the corresponding area in a same blinking pattern as a lighthouse included in the corresponding area.

13. A chart display method for a chart display device having
a display unit configured to display a chart on a screen; and
a touch position detection unit configured to detect a touched position of the screen, the chart display method comprising;
determining whether an operation auxiliary tool having detected elements is placed on the screen, the detected elements being detected by the touch position detection unit;
specifying a corresponding area corresponding to the operation auxiliary tool in the chart based on the position of the detected element of the operation auxiliary tool placed on the screen; and
receipting an operation on the corresponding area in the chart.

14. A computer program for a computer of a chart display device having
a display unit configured to dislpay a chart on a screen; and
a touch position detection uni configured to detect a touched position of the screen, the computer program comprising;
determining whether an operation auxiliary tool having detected elements is placed on the screen, the detected elements being detected by the touch position detection unit;
specifying a corresponding area corresponding to the operation auxiliary tool in the chart based on the position of the detected element of the operation auxiliary tool placed on the screen; and
receipting an operation on the corresponding area in the chart.

15. An operation auxiliary tool used in a chart display device having
a display unit configured to display a chart on a screen; and
a touch position detection unit configured to detect touched position on the screen, the operation auxiliary tool comprising;
detected elements configured to be detected, the detected elements (91) being detected by the touch position detection unit; and
inputting an operation for a corresponding area in the chart corresponding to the operation auxiliary tool being specified based on the position of the detected elements of the operation auxiliary tool placed on the screen.
